(19) Europäisches Patentamt
European Patent Office
Office européen des brevets

(11) EP 1 184 661 B1

(12) # EUROPÄISCHE PATENTSCHRIFT

(45) Veröffentlichungstag und Bekanntmachung des Hinweises auf die Patenterteilung:
**28.12.2005 Patentblatt 2005/52**

(51) Int Cl.[7]: **G01N 21/25**, G01N 21/47, G01J 3/46

(21) Anmeldenummer: **01116085.0**

(22) Anmeldetag: **03.07.2001**

(54) **Charakterisierung der Verteilungsgüte von Weisspigmenten in einer Matrix**

Characterization of the quality of dispersion of white pigments in a matrix

Charactérisation de la qualité de la distribution des pigments blancs dans une matrice

(84) Benannte Vertragsstaaten:
**DE ES FR GB IT NL**

(30) Priorität: **01.09.2000 DE 10043038**

(43) Veröffentlichungstag der Anmeldung:
**06.03.2002 Patentblatt 2002/10**

(73) Patentinhaber: **KRONOS TITAN GmbH**
**51373 Leverkusen (DE)**

(72) Erfinder: **Schmelzer, Josef, Dr.**
**51067 Köln (DE)**

(56) Entgegenhaltungen:
**DE-A- 4 202 822**
**GB-A- 1 589 705**
**US-A- 3 916 168**
**US-A- 4 887 217**
**US-A- 5 231 472**
**US-A- 6 064 487**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 184 661 B1

Printed by Jouve, 75001 PARIS (FR)

## Beschreibung

Die Erfindung richtet sich auf ein Verfahren zur Charakterisierung der Korngrößenverteilung von Weißpigmentteilchen in einer Matrix, welche als Verteilungsgüte S angegeben und aus einer Remissionskurve R(λ) von $\lambda_1$ bis $\lambda_2$ bestimmt wird.

Zur Beurteilung einer Beschichtung im optischen Bereich werden Reflektometer-und Glanzschleiermessungen, Farbmessungen, das Kontrastverhältnis und der Streukoeffizient herangezogen. Alle diese Werte hängen mit der Verteilung des Weißpigmentes in der Matrix zusammmen. Die Kornverteilungsfunktion wird aus elektronenmikroskopischen Aufnahmen von Dünnschnitten einer Lackschicht erhalten. Dem Praktiker steht dieses aufwendige Messverfahren nicht immer zur Verfügung.

Auch bei der Rezepturentwicklung auftretende Fragen, wie die Flockulation in verschiedenen Bindemitteln, der Einfluss des Pigmentfeinanteils, die Dispergiermittelkonzentration u.ä. hängen mit dem Kornspektrum des Weißpigmentes in komplexer Weise zusammen, und es wäre hier besonders ein schnelles, aussagekräftiges Beurteilungskriterium für die Verteilungsgüte des Weißpigmentes hocherwünscht.

Im Stand der Technik sind verschiedene Verfahren zur Ermittlung von Farbrezepturen von Pigmentmischungen bekannt. Gemäß der US 6,064,487 werden in Effektpigmentmischungen die verschiedenen optischen Parameter (Streukoeffizient, Absorptionskoeffizient, Phasenfunktion) aus den Reflexionsfaktoren, die bei verschiedenen Beleuchtungsgeometrien gemessen werden, über eine Eichstaffel experimentell ermittelt. Die US 3,916,168 lehrt die Berechnung der Farbrezeptur von Schichten, die metallische Pigmente enthalten, anhand des Anteils diffuser und des Anteils gerichteter Reflexion in der Pigmentmischung. Die US 4,887,217 beinhaltet ein Verfahren zur Anpassung von Farblacken an einen Farbstandard, indem die theoretischen Farbwerte des trockenen Lacks und die entsprechenden Mengenverhältnisse der Farbkomponenten bestimmt werden. In der DE 42 02 822 A1 wird eine optische Spektralanalyseeinrichtung für die kostengünstige Messung von optischen Eigenschaften einer Probe beschrieben.

Es wurde nun ein Verfahren gefunden zur Charakterisierung der Korngrößenverteilung von Weißpigmentteilchen in einer Matrix, angegeben als Verteilungsgüte S und bestimmt aus einer Remissionskurve R(λ) von $\lambda_1$ bis $\lambda_2$, das dadurch gekennzeichnet ist, dass die Verteilungsgüte S dem Quotienten $F_1/F_2$ proportional gesetzt wird, wobei

$$F_1=\int_{\lambda_1}^{\lambda_m} R\,d\lambda$$

und

$$F_2=\int_{\lambda_m}^{\lambda_2} R\,d\lambda$$

und

$\lambda_1 < \lambda_m < \lambda_2$ ist.

Das erfindungsgemäße Verfahren zur Charakterisierung der Korngrößenverteilung von Weißpigmentteilchen in einer Matrix ist dadurch gekennzeichnet, dass den Werten der Verteilungsgüte $S_i$ die gleichen Werte von $\lambda_1$, $\lambda_m$ und $\lambda_2$ zugrunde liegen.

Weitere vorteilhafte Verfahrensvarianten sind in den Unteransprüchen beschrieben.

Die enge, aber nicht ganz genau bekannte Verzahnung der Remissionskurve mit der Korngrößenverteilungskurve der Pigmentteilchen führt überraschend zu einem Mess- und Prüfverfahren, das ohne "Normal", ohne einen Standardvergleichswert, einen aussagekräftigen "absoluten" Wert der Verteilungsgüte liefert und insbesondere aussagekräftige Werte bei verschiedenen Systemen liefert. Es ist dabei nur erforderlich, von den gleichen Werten für den Messbereich der Remission und dem gleichen mittleren Wert $\lambda_m$ auszugehen. Die Grenzen $\lambda_1$ und $\lambda_2$ sind an sich frei wählbar. Mit den Werten 380 nm und 720 nm übernimmt man oft die durch das Remissionsmessgerät (Spektralphotometer) feststehenden Apparatedaten. Eine einmal getroffene Festlegung von $\lambda_m$, sei es bevorzugt der arithmetische Mittelwert aus $\lambda_1$ und $\lambda_2$ oder ein fester Wert nahe dem Maximum der Remissionskurve, bevorzugt 560 nm, muss beibehalten werden.

Die nachfolgenden Anwendungen zeigen beispielhaft, wie das erfindungsgemäße Verfahren in der Pigmententwicklung und in der Anwendungstechnik eingesetzt werden kann.

Es zeigen:

- Figur 1 Remissionskurven von drei Pigmenten,
- Figur 2 den Einfluss der Pigmentvolumenkonzentration,
- Figur 3 den Einfluss des Bindemittels,
- Figur 4 den Einfluss des Vernetzerharzes,
- Figur 5 den Einfluss des Dispergieradditives,
- Figur 6 den Einfluss der Beschichtungsapplikation und der Lagerung,
- Figur 7 den Einfluss der Beschichtungsstärke.

Die Remissionskurven wurden mit einem TCM-Spektralphotometer der Fa. Byk Gardener und einem Spektralphotometer Color Guide der Fa. Byk Gardener bei der Normlichtart C, 2°-Normalbeobachter ermittelt. Der Messbereich geht bei diesen Geräten von 380 nm bis 720 nm.

Als Substrate für die Proben dienten weiße Porzellankacheln, Glasplatten und weiß grundierte Aluminiumbleche.

Als Pigmente wurden die Typen KRONOS 2057, KRONOS 2059, KRONOS 2310, KRONOS 2063 und KRONOS 2190 sowie Versuchspigmente verwendet.

Es wurden Rezepturen auf der Basis von Bayhydrol D 155 / Resimene 745 und Larodur 150 BX/ Cymel 327 u.a. eingesetzt.

Die Pigmentvolumenkonzentrationen (PVK) betrugen bei Bayhydrol D 155 10% und 24%, bei Larodur 150 BX 24%.

Die Schichtdicken lagen bei den Kacheln bei ca. 30 µm bis 40 µm, was den Messanforderungen für Y-Werte (Helligkeit) nach DIN 53164 entsprach, bei den Glasplatten waren die Rakelhöhen 30 µm, 50 µm und 200 µm und bei den Aluminiumblechen >50 µm Trockenschichtdicke.

Auf den Kacheln und den Glasplatten wurde die Schicht aufgezogen, auf die Aluminiumbleche aufgespritzt.

Figur 1 zeigt Remissionskurven der Pigmente KRONOS 2057, KRONOS 2059 und KRONOS 2310. Die mittleren Korndurchmesser dieser Pigmente wurden in verdünnter Suspension durch Sedigraphenmessungen ermittelt. Die niedrigste Kornfeinheit (Medianwert $d_{50}$) besitzt danach KRONOS 2310 (0,20µm), danach folgt KRONOS 2059 (0,23µm) und schließlich KRONOS 2057 (0,25µm).

Man erkennt, dass die Remissionskurve für das feinteilige KRONOS 2310 im dargestellten kurzwelligen Bereich zwischen 420 nm und 560 nm, im Vergleich zu ihrem Maximalwert bei 560 nm, höhere Remissionen zeigt, als das bei dem weniger feinteiligen Pigment KRONOS 2059 und dem am wenigsten feinteiligen Pigment KRONOS 2057 im Vergleich zu ihren Maximalwerten bei 560 nm der Fall ist.

Die Remissionswerte im langwelligen Bereich der Remissionskurven ($\lambda$ > 560 nm) sind für das am wenigsten feinteilige Pigment KRONOS 2057 im Vergleich zum Maximum größer als die Remissionswerte für die feinteiligeren Pigmente KRONOS 2059 und KRONOS 2310, im Vergleich zu deren Maxima.

Trotz gleicher PVK ist die Gesamtremissionsstärke für die 3 Beschichtungen über fast den gesamten Wellenlängenbereich unterschiedlich. Um Effekte von Lichtabsorption, die bei dem erfindungsgemäßen Verfahren keine Rolle spielen, zu eliminieren, bietet es sich an, die Remissionskurve bei, hier bevorzugt, $\lambda_m$= 560 nm, auf den Wert 100 zu normieren.

Dabei werden die bereits beschriebenen höheren relativen Remissionswerte von KRONOS 2310 im Vergleich zu KRONOS 2059 und besonders zu KRONOS 2057 im kurzwelligen Bereich ihrer Remissionskurven deutlicher. Das entsprechende gilt für den langwelligen Bereich.

Beispiel 1: Kornfeinheit

Die Verteilungsgüte S, die sich als Quotient der Flächen $F_1$ und $F_2$ darstellt, sagt hinsichtlich der Korngrößenverteilung von KRONOS 2310, KRONOS 2059 und KRONOS 2057 folgendes aus:

KRONOS 2310 besitzt im Vergleich zu KRONOS 2059, und noch ausgeprägter im Vergleich zu KRONOS 2057, einen höheren Feinanteil in seiner Kornverteilung, was durch eine unabhängige Methode (Sedigraphenmessung) bestätigt wurde. Dieser hohe Feinanteil führt, wenn er in einer Matrix erhalten bleibt, zu einer hohen Remission im kurzwelligen Bereich der Remissionskurve. Umgekehrt besitzt das Pigment KRONOS 2310 einen geringeren Anteil an relativ grobteiligen Partikeln. Dieser niedrige Grobanteil führt zu einer niedrigen Remission im langwelligen Bereich. Bildet man nun den Quotienten aus der Fläche $F_1$ unter dem kurzwelligen Teil der Remissionskurve, mit der Fläche unter dem langwelligen Teil der Remissionskurve $F_2$, so ergibt sich für das feinteilige Pigment KRONOS 2310 ein hoher Wert.

Entsprechend erhält man für das mittelfeinteilige Pigment KRONOS 2059 einen mittleren Wert für die Verteilungsgüte S und für das weniger feinteilige Pigment KRONOS 2057 einen niedrigen Wert.

Generell gilt also: Hohe Werte für die Verteilungsgüte S bedeuten, dass die Pigmente feinteilig sind und niedrige Werte für die Verteilungsgüte S bedeuten, dass die Pigmente weniger feinteilig sind.

Beispiel 2: Einfluss der Pigmentvolumenkonzentration und der Kornfeinheit

Werden zwei Lacke hergestellt, die sich nur in der PVK des Weißpigmentes unterscheiden und bei dem sonst alle Rezepturkomponenten, Herstellungs-, Lagerungs- und Applikationsbedingungen konstant gehalten werden, dann hat die Rezeptur mit der höheren PVK die höhere Verteilungsgüte S.

Das bedeutet, dass durch Flockulation vorher nicht vom Messgerät erfasster Feinanteile Teilchen entstehen, die vom Messgerät erfasst werden können und andererseits grobteilige Partikel durch Flockulation aus dem Erfassungsbereich des Messgeräts verschwinden. Auch innerhalb der vom Messgerät erfassten Kornverteilung kommt es zu Verschiebungen. In der Bilanz äußern sich diese Vorgänge als Erhöhung der Verteilungsgüte S.

In der Figur 2 sind die Verteilungsgütewerte für eine PVK von 24% und 10% als Balkendiagramm dargestellt. In die Balken wurden die Fehlerstreuungen (95%-Streubereich) für den arithmetischen Mittelwert von 10 aufeinanderfolgenden Einzelmessungen eingezeichnet.

Beispiel 3: Einfluss des Bindemittels

In Figur 3 sind die Verteilungsgüten für die Pigmente KRONOS 2057, KRONOS 2059 und 2310 dargestellt. Die den Beschichtungen zugrunde liegenden Lacke sind ein Wasserlack auf Basis eines wasserlöslichen Polyesters, Bayhydrol D 155 (B) und ein lösemittellösliches Acrylharz, Larodur BX 150 (L), beide vernetzt mit jeweils geeigneten Vernetzer-Melaminharzen.

Es ist erkennbar, die Verteilungsgüte für KRONOS 2057 im Wasserlack B deutlich niedriger ist als im Lösemittellack L. Dies deutet auf eine niedrigere Kornfeinheit dieses Pigments im Wasserlack hin.

Die Pigmente KRONOS 2059 und KRONOS 2310 weisen in beiden Bindemitteln die gleichen Verteilungsgüten auf.

Das unterschiedliche Verhalten der Pigmente gegenüber einem Austausch des Bindemittels kann den unterschiedlichen Oberflächenbehandlungen der Pigmente zugeordnet werden, die zu einem unterschiedlichen Benetzungsverhalten der Pigmente führen, wenn das Bindemittel gewechselt wird.

Dieses Beispiel zeigt, dass mit der erfindungsgemäßen Methode der Einfluss von unterschiedlichen Bindemitteln auf die Kornfeinheit der Weißpigmente in Beschichtungen untersucht werden kann.

Beispiel 4: Einfluss des Vernetzerharzes

Häufig wird bei der Entwicklung von Lacken nur eine Komponente, wie z.B. das Vernetzerharz, ausgetauscht, um damit Einfluss auf die mechanischen Eigenschaften, die Reaktivität oder andere Eigenschaften des Lackes zu nehmen. Diese Änderung darf nicht zu Verschlechterungen der Pigmentverteilung führen.

Die Figur 4 zeigt, dass der Wechsel vom Melaminharz Cymel 327 zum Melaminharz Cymel 1156 zu einer Erhöhung der Verteilungsgüte führte. Ursache ist vermutlich eine bessere Benetzung der Pigmente

Beispiel 5: Einfluss des Dispergieradditives

Pigmentierten Lacken werden häufig Dispergieradditive zugesetzt, um eine bessere Dispergierung der eingesetzten Pigmente zu erzielen und um den erreichten Dispergierzustand zu stabilisieren.

Die Figur 5 zeigt, dass der Zusatz des gewählten Dispergieradditivs Ser Ad 1544 in einer Konzentration von 0,5% bezogen auf das Pigment zu einer Erhöhung der Verteilungsgüte aller untersuchten Pigmente führte. Die Wirkung des Zusatzes war stärker für die Pigmente KRONOS 2059 und KRONOS 2310 als für das Pigment KRONOS 2057.

Dieses Ergebnis zeigt, dass die erfindungsgemäße Anwendung der Messmethode geeignet ist, die Wirkung von Art und Konzentration von Dispergieradditiven in Lacken zu prüfen.

Beispiel 6: Einfluss der Beschichtungsapplikation und Lagerung von Lacken

Werden pigmentierte Lacke gelagert, so kann es zu Alterungs- und Reifungsprozessen in Form von Pigmentflockulationen oder Nachbenetzung von Pigmentagglomeraten kommen. Diese Vorgänge verändern die Kornverteilung des Pigmentes im Nasslack.

Wird ein solcher Nasslack appliziert, so kann die geänderte Kornverteilung ggf. in der getrockneten Beschichtung wiedergefunden werden. Flockulation bedeutet in diesem Fall, dass die Verteilungsgüte des Pigmentes in der Beschichtung niedrigere Werte aufweist als nichflockulierte Pigmente.

Bei der Applikation von flockulierten Nasslakken werden auf den Lack Scherkräfte ausgeübt. Die Größe der Scherkräfte hängt von der Applikationsart ab. So übt die Applikation durch Aufziehen des Lackes auf ein Substrat eine geringere Scherkraft aus als eine Applikation mit einer Spritzpistole.

Es ist somit möglich, dass bei Applikation mittels Aufziehen die Flockulation der Pigmente in der Beschichtung erhalten bleibt, und dass bei Applikation mittels Spritzauftrag die Flockulate zerstört werden. Die Verteilungsgüte einer aufgezogenen Beschichtung dieses Lacks sollte danach kleinere Werte aufweisen als die Verteilungsgüte von gespritzten Beschichtungen.

Die Figur 6 zeigt die Werte der Verteilungsgüten für die Pigmente KRONOS 2063, KRONOS 2190 und KRONOS 2310, sowie für eine Anzahl von KRONOS-Versuchspigmenten. Es ist zu erkennen, dass alle Verteilungswerte für die aufgezogenen Beschichtungen kleiner sind als für die entsprechenden gespritzten Beschichtungen.

Die Figur 6 zeigt, dass die erfindungsgemäße Anwendung der Messmethode geeignet ist, den Einfluss einer Lagerung des Nasslackes und die Wirkung unterschiedlicher Applikationsarten auf die Kornfeinheit in der Beschichtung zu untersuchen.

Beispiel 7: Einfluss der Beschichtungsstärke auf die Remissionskurve

Mit zunehmender Schichtdicke ändert sich die Remissionskurve bis eine deckende Schicht erreicht wurde. Danach ändert sich die Remissionskurve bei weiterer Erhöhung der Schichtstärke nicht mehr. Parallel zur Änderung der Kurverform der Remissionskurve strebt die Verteilungsgüte S bei Erhöhung der Schichtdicke einem Grenzwert zu.

Das bedeutet, dass die erfindungsgemäße Messmethode geeignet ist, für eine gegebene Lackrezeptur, gegebene Lagerbedingungen und eine gegebene Applikationsmethode, die deckende Schichtdicke zu ermitteln.

## Patentansprüche

1. Verfahren zur Charakterisierung der Korngrößenverteilung von Weißpigmentteilchen in einer Matrix, angegeben als Verteilungsgüte S und bestimmt aus einer Remissionskurve R(λ) von $\lambda_1$ bis $\lambda_2$, **dadurch gekennzeichnet,**
**dass** die Verteilungsgüte S dem Quotienten $F_1 / F_2$ proportional gesetzt wird, wobei

$$F_1 = \int_{\lambda_1}^{\lambda_m} R \, d\lambda$$

und

$$F_2 = \int_{\lambda_m}^{\lambda_2} R \, d\lambda$$

und
$\lambda_1 < \lambda_m < \lambda_2$ ist.

2. Verfahren zur Charakterisierung von Komgrößenverteilungen von Weißpigmentteilchen in einer Matrix, angegeben als jeweilige Verteilungsgüte $S_i$ nach Anspruch 1, **dadurch gekennzeichnet,**
**dass** den Werten der Verteilungsgüte $S_i$ die gleichen Werte von $\lambda_1$, $\lambda_m$ und $\lambda_2$ zugrunde liegen.

3. Verfahren nach Anspruch 1 oder 2, **dadurch gekennzeichnet,**
**dass** $\lambda_1$ = 380 nm und $\lambda_2$ = 720 nm ist.

4. Verfahren nach Anspruch 1, 2 oder 3, **dadurch gekennzeichnet,**
**dass** $\lambda_m = (\lambda_1 + \lambda_2) / 2$ ist.

5. Verfahren nach Anspruch 1, 2 oder 3, **dadurch gekennzeichnet,**
**dass** $\lambda_m$ = 560 nm ist.

6. Verfahren nach einem oder mehreren der Ansprüche 1 bis 5, **dadurch gekennzeichnet, dass** das Weißpigment in einer festen Matrix verteilt ist.

## Claims

1. Method for characterising the particle size distribution of white-pigment particles in a matrix, indicated as the quality of distribution S and determined from a reflectance curve R(λ) from $\lambda_1$ to $\lambda_2$, **characterised in that** the quality of distribution S is proportional to the quotient $F_1 / F_2$, where

$$F_1 = \int_{\lambda_1}^{\lambda_m} R \, d\lambda$$

and

$$F_2 = \int_{\lambda_m}^{\lambda_2} R \, d\lambda$$

and
$\lambda_1 < \lambda_m < \lambda_2$.

2. Method for characterising particle size distributions of white-pigment particles in a matrix, indicated as the respective quality of distribution $S_i$, according to Claim 1, **characterised in that**
the values of the quality of distribution $S_i$ are based on the same values of $\lambda_1$, $\lambda_m$ and $\lambda_2$.

3. Method according to Claim 1 or 2, **characterised in that**
$\lambda_1$ = 380 nm and $\lambda_2$ = 720 nm.

4. Method according to Claim 1, 2 or 3, **characterised in that**
$\lambda_m = (\lambda_1 + \lambda_2) / 2$.

5. Method according to Claim 1, 2 or 3, **characterised in that**
$\lambda_m$ = 560 nm.

6. Method according to one or more of Claims 1 to 5, **characterised in that** the white pigment is distributed in a solid matrix.

## Revendications

1. Procédé de caractérisation de la distribution granulométrique de particules de pigment blanc dans une matrice, indiquée en tant que qualité de distribution S et déterminée à partir d'une courbe de réflectance

$R(\lambda)$ de $\lambda_1$ à $\lambda_2$, **caractérisé en ce que** la qualité de distribution S est définie comme étant proportionnelle au quotient $F_1/F_2$ dans lequel

$$F_1 = \int_{\lambda_1}^{\lambda_m} R d\lambda$$

et

$$F_2 = \int_{\lambda_m}^{\lambda_2} R d\lambda$$

et
$\lambda_1 < \lambda_m < \lambda_2$

**2.** Procédé de caractérisation de distributions granulométriques de particules de pigment blanc dans une matrice, indiquées en tant que qualité de distribution $S_i$ respective selon la revendication 1, **caractérisé en ce que** les mêmes valeurs de $\lambda_1$, $\lambda_m$, $\lambda_2$ se trouvent à la base des valeurs de la qualité de distribution $S_i$.

**3.** Procédé selon la revendication 1 ou 2, **caractérisé en ce que** $\lambda_1$ = 380 nm et $\lambda_2$ = 720 nm.

**4.** Procédé selon la revendication 1, 2 ou 3 **caractérisé en ce que** $\lambda_m = (\lambda_1 + \lambda_2) /2$.

**5.** Procédé selon la revendication 1, 2 ou 3 **caractérisé en ce que** $\lambda_m$ = 560 nm.

**6.** Procédé selon l'une quelconque ou plusieurs parmi les revendications 1 à 5, **caractérisé en ce que** le pigment blanc est distribué dans une matrice solide.

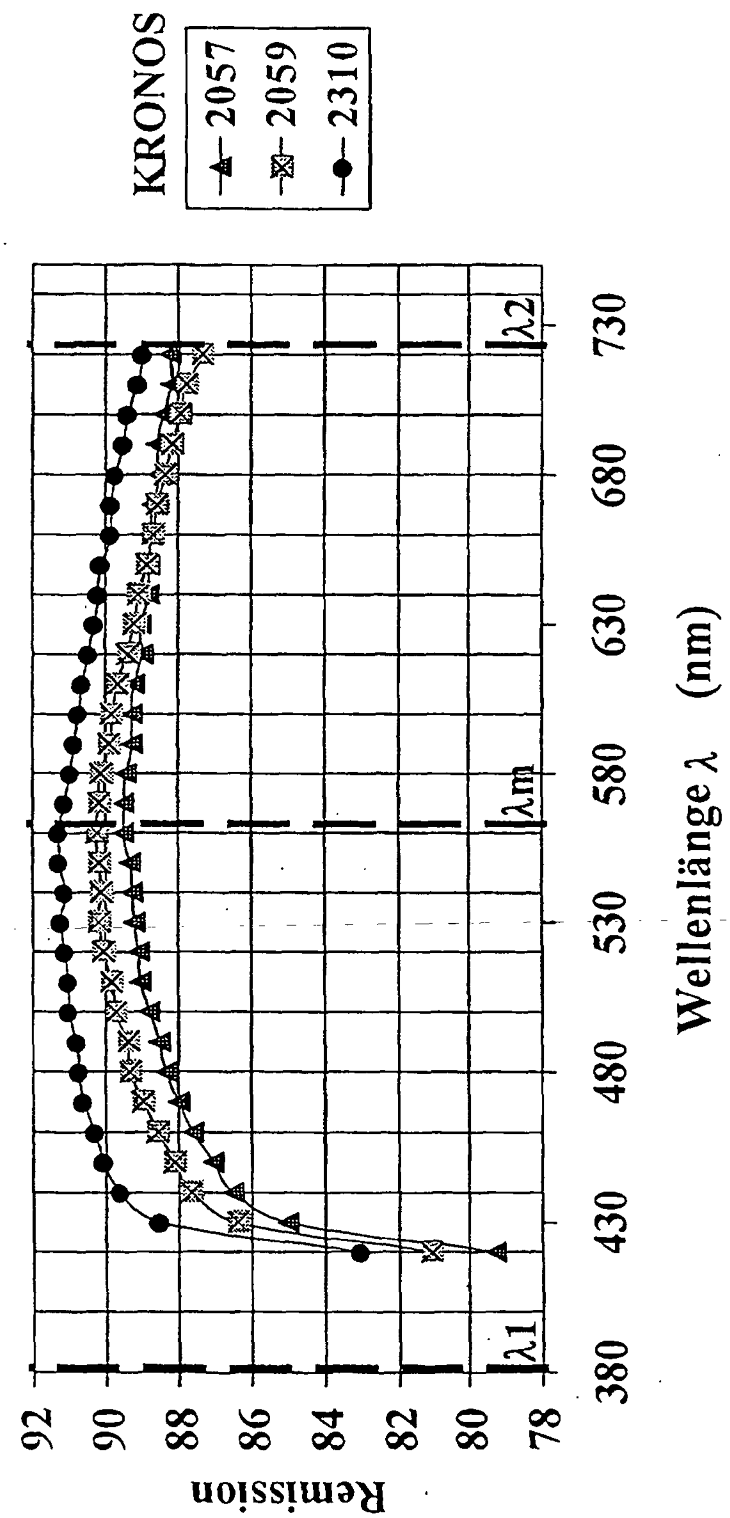
KRONOS
2057
2059
2310
Remission
92
90
88
86
84
82
80
78
380
430
480
530
580
630
680
730
λ1
λm
λ2
Wellenlänge λ (nm)

Fig. 1

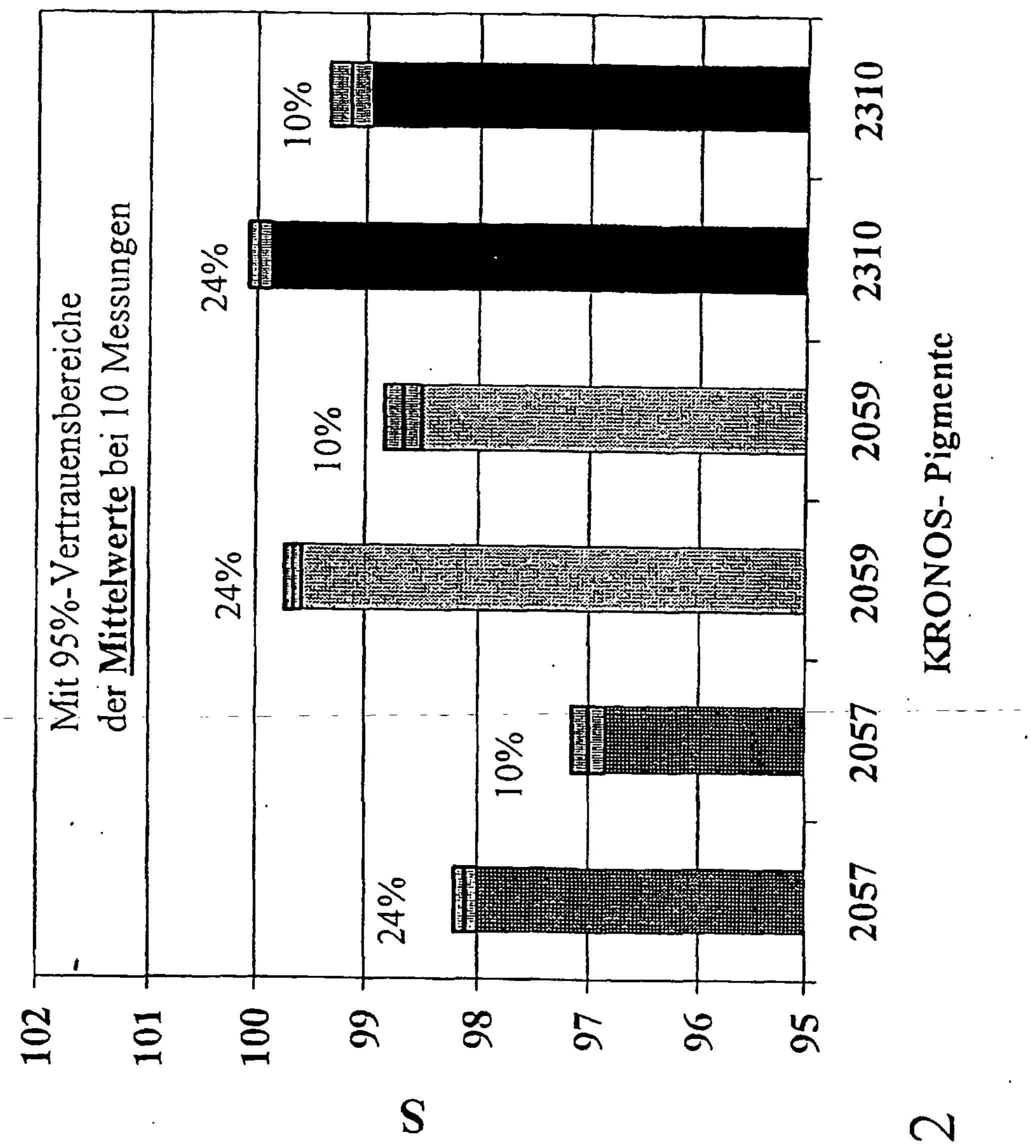
Mit 95%-Vertrauensbereiche
der Mittelwerte bei 10 Messungen
S
102
101
100
99
98
97
96
95
24%
10%
24%
10%
24%
10%
2057
2057
2059
2059
2310
2310
KRONOS- Pigmente

Fig. 2

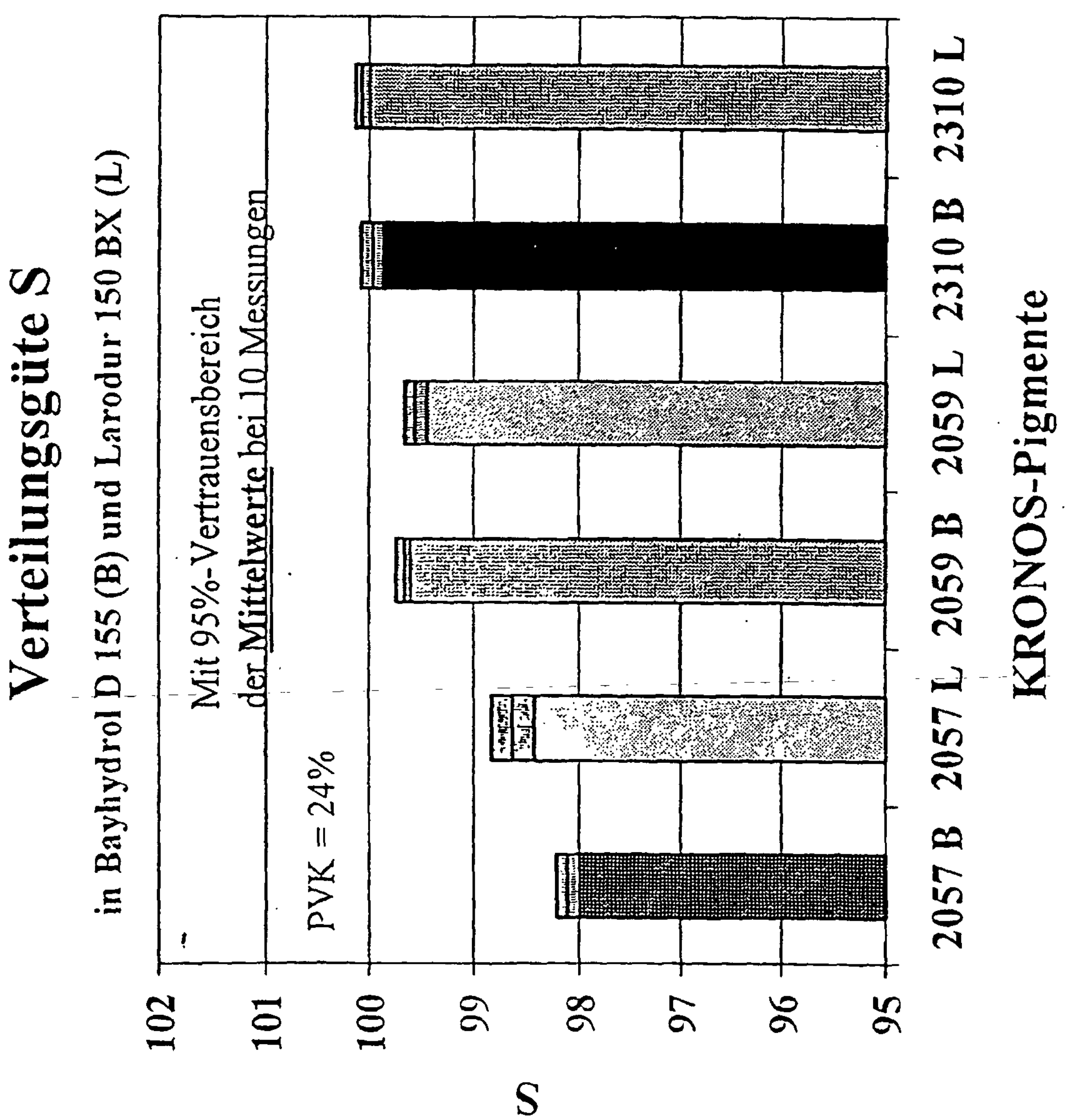
Verteilungsgüte S
in Bayhydrol D 155 (B) und Larodur 150 BX (L)
Mit 95%-Vertrauensbereich
der Mittelwerte bei 10 Messungen
PVK = 24%
S
102
101
100
99
98
97
96
95
2057 B
2057 L
2059 B
2059 L
2310 B
2310 L
KRONOS-Pigmente

Fig. 3

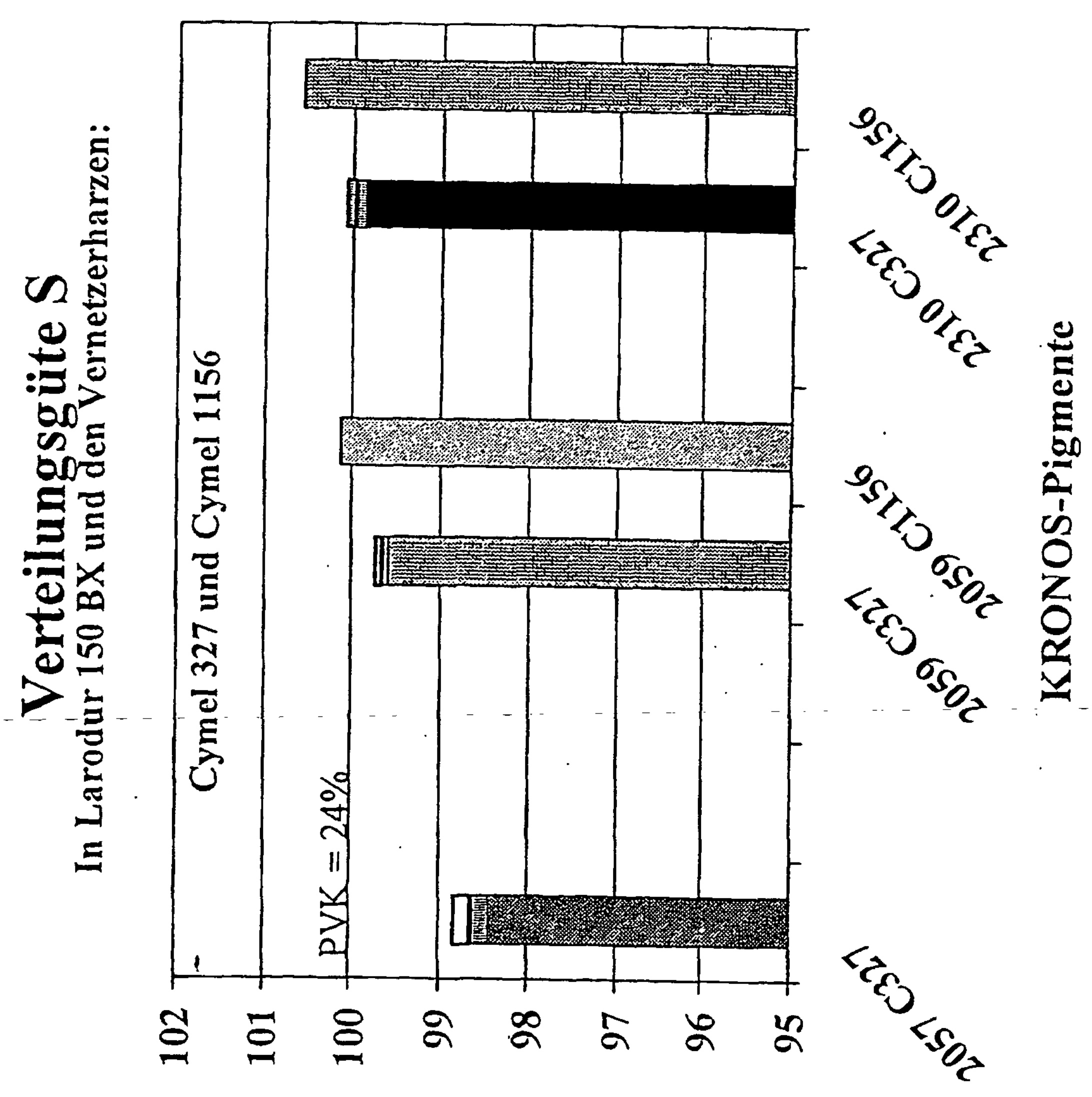
Verteilungsgüte S
In Larodur 150 BX und den Vernetzerharzen:
Cymel 327 und Cymel 1156
PVK = 24%
S
102
101
100
99
98
97
96
95
2057 C327
2059 C327
2059 C1156
2310 C327
2310 C1156
KRONOS-Pigmente

Fig. 4

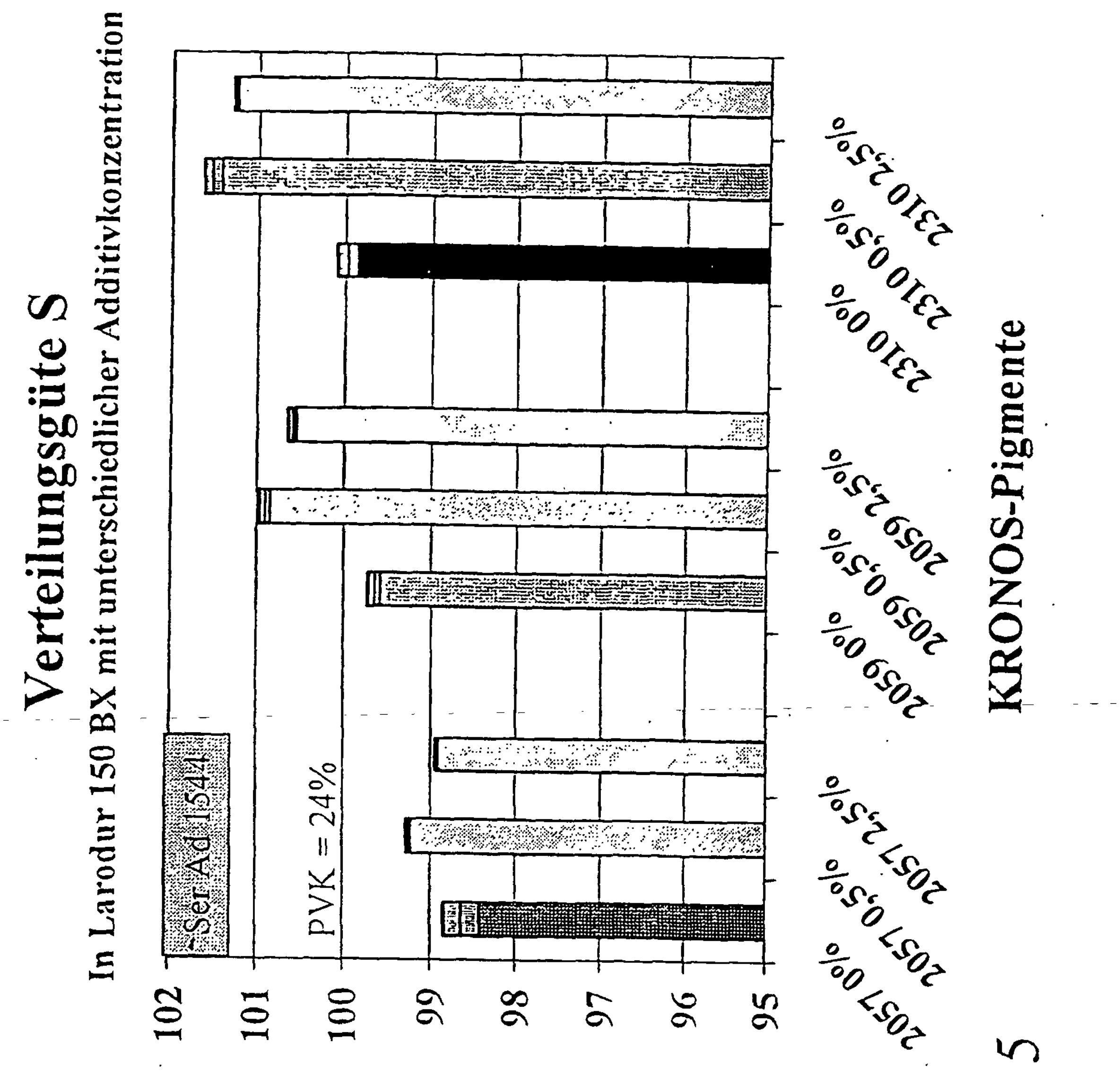
Verteilungsgüte S
In Larodur 150 BX mit unterschiedlicher Additivkonzentration
-Ser Ad 1544
PVK = 24%
S
102
101
100
99
98
97
96
95
2057 0%
2057 0,5%
2057 2,5%
2059 0%
2059 0,5%
2059 2,5%
2310 0%
2310 0,5%
2310 2,5%
KRONOS-Pigmente

Fig. 5

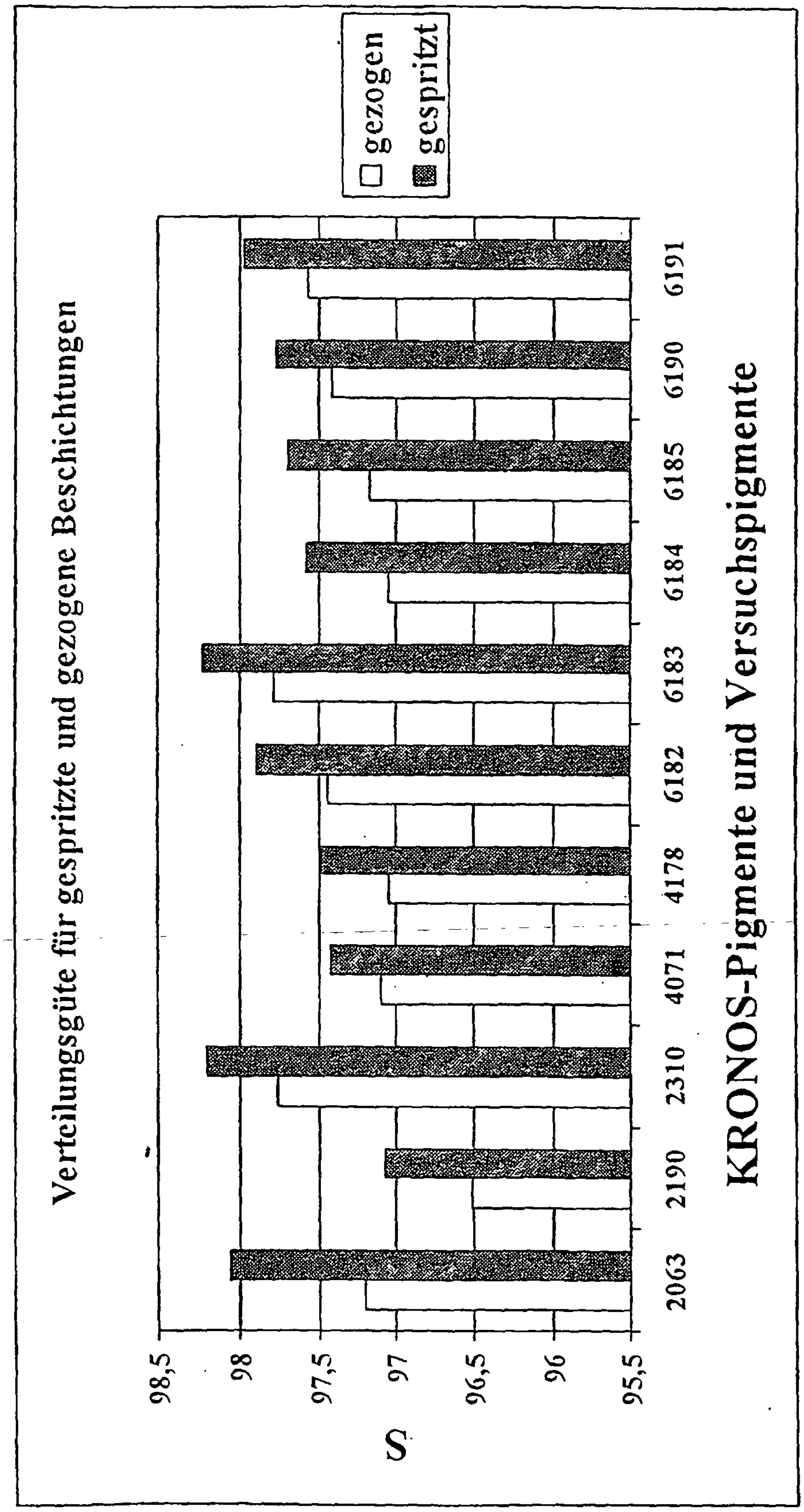
Verteilungsgüte für gespritzte und gezogene Beschichtungen
gezogen
gespritzt
S
98,5
98
97,5
97
96,5
96
95,5
2063
2190
2310
4071
4178
6182
6183
6184
6185
6190
6191
KRONOS-Pigmente und Versuchspigmente

Fig. 6

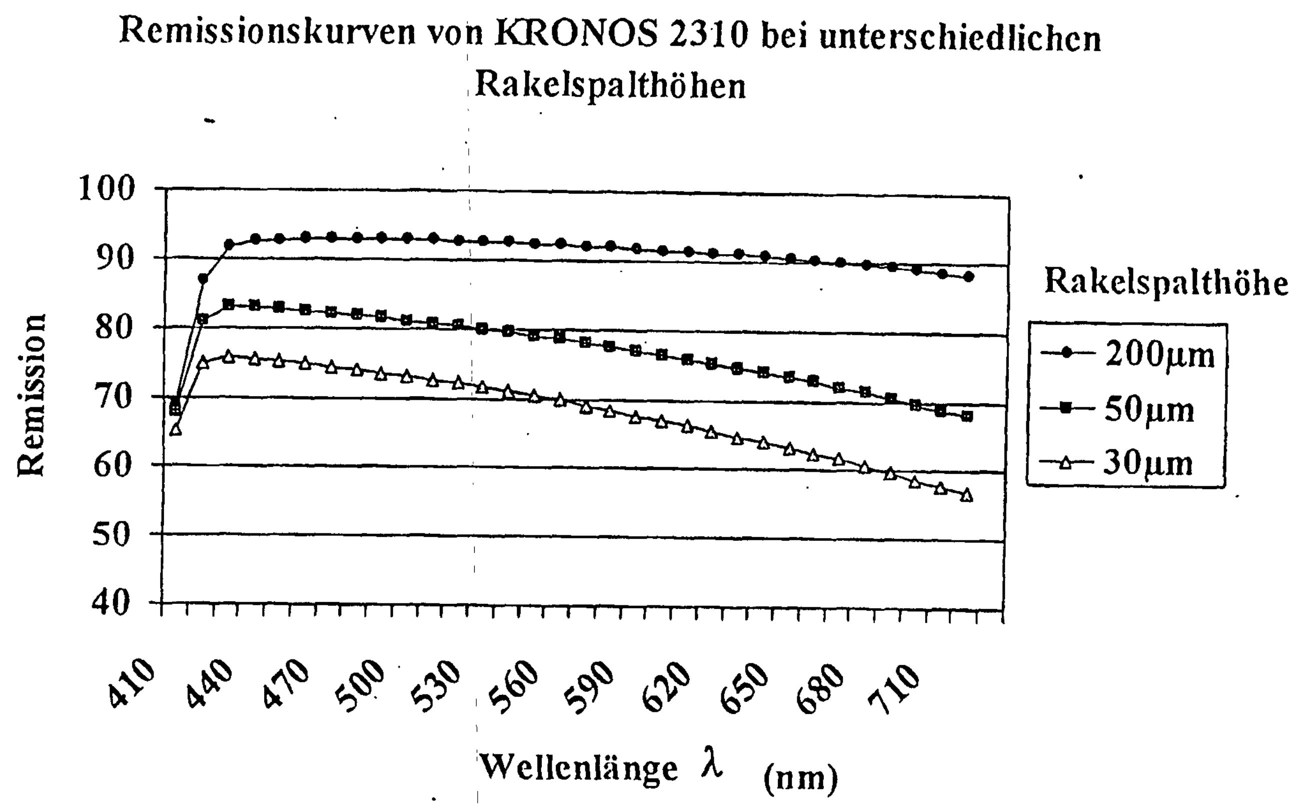
Remissionskurven von KRONOS 2310 bei unterschiedlichen Rakelspalthöhen
100
90
80
70
60
50
40
Remission
410
440
470
500
530
560
590
620
650
680
710
Wellenlänge λ (nm)
Rakelspalthöhe
200µm
50µm
30µm

Fig. 7